# EUROPEAN PATENT SPECIFICATION

(11) **EP 2 677 874 B1**
(45) Date of publication and mention of the grant of the patent: **03.10.2018**
(21) Application number: 12705023.5
(22) Date of filing: 08.02.2012
(51) Int. Cl.: A21D 10/00, A21D 10/04, A21D 13/00, A21D 13/066, A23L 29/262, A23L 7/10, A23L 7/109, A23L 7/117, A23L 33/00, A21D 13/047, A21D 13/40, A23L 33/20, A21D 2/18, A21D 13/04, A21D 2/36

(54) **COMPOSITION COMPRISING GLUTEN-FREE CEREAL FLOUR**
ZUSAMMENSETZUNG ENTHALENDE GLUTENFREIES MEHL
COMPOSITION COMPRENANT UNE FARINE SANS GLUTEN

(30) Priority: 24.02.2011 US 201161446308 P
(43) Date of publication of application: 01.01.2014
(73) Proprietor: Dow Global Technologies LLC, Midland, MI 48674 (US)
(72) Inventor: ZHANG, Li, Franklin Park, NJ 08823 (US); SCHMITT, Robert L., Annandale, NJ 08801 (US)
(74) Representative: f & e patent
(86) International application number: PCT/US2012/024279
(87) International publication number: WO 2012/115782

(56) References cited:
- EP-A1- 1 433 383
- EP-A2- 2 253 217
- WO-A1-98/27989
- WO-A1-99/33357
- WO-A1-2010/006778
- WO-A1-2010/053579
- US-A- 4 109 018
- US-A1- 2006 088 647

## Description

### Field

This invention relates to a composition comprising gluten-free cereal flour, and a hydroxypropyl methylcellulose or methyl cellulose with a special particle size. The invention relates also to the use of this composition for making a dough or batter and in gluten-free food products.

### Background

Gluten is a protein complex found in triticeae tribe of grains, which includes wheat, barley and rye. The gluten content in wheat flour provides desirable organoleptic properties, such as texture and taste, to innumerable bakery and other food products. Gluten also provides the processing qualities to both the commercial food manufacturer as well as the home baker. In general, it is very difficult to make bread using gluten-free cereal flours such as rice flour and buckwheat flour. When dough is fermented with yeast, in the case of dough using wheat flour or rye flour containing gluten, the carbon dioxide gas generated by fermentation is retained by the gluten so that the gluten network is extended and the dough rises. In the case of dough using gluten-free cereal flour, the carbon dioxide gas generated by fermentation is not retained within the dough so that the dough does not efficiently rise. Gluten is considered by many to be the "heart and soul" of bakery and other food products.

However, gluten has its drawbacks. The gluten protein complex, upon entering the digestive tract, breaks down into peptide chains like other protein sources, but the resulting gluten-related peptide chain length is longer than for other proteins. For this and other reasons, in some people, these longer peptides trigger an immune response commonly referred to as celiac disease. Celiac disease is characterized by inflammation, villous atrophy and cryptic hyperplasia in the intestine. The mucosa of the proximal small intestine is damaged by an immune response to gluten peptides that are resistant to digestive enzymes. This damage interferes with the body's ability to absorb vital nutrients such as proteins, carbohydrates, fat, vitamins, minerals, and in some cases, even water and bile salts. If left untreated, celiac disease increases the risk of other disorders, such as anemia, osteoporosis, short stature, infertility and neurological problems, and has been associated with increased rates of cancer and other autoimmune disorders. Accordingly, much research has been spent on finding gluten-free food products

US 2006/088647 A1 discloses a mix for the preparation of rice-containing baked products, comprising 100% rice flour containing about 15 to about 26% amylose, about 0 to about 20% waxy rice flour, about 1 to about 4% hydroxypropyl methylcellulose food gum, about 1 to about 5% yeast, about 0 to about 10% rice bran, about 4 to about 20% sugar, and about 1 to about 4% salt.

EP 1 433 383 A1 discloses a natural flour mixture that is completely free from wheat, gluten, cow's milk, soya, peanut and chicken egg constituents, comprising: (a) a starch that is not derived from wheat, (b) gluten substitute, (c) burnt sugar and (d) flour additives. The gluten substitute comprises at least one ingredient selected from xanthan gum, methylcellulose, guar flour and galactomannan. EP 1 433 383 A1 discloses also a method for the preparation of a bakery product comprising the natural flour mixture.

WO 2010/053579 A1 discloses a gluten-free composition for cake bakery products, for individuals afflicted with celiac disease, comprising gluten-free flour or starch, wherein the gluten-free flour or starch comprises corn starch; an hydrocolloid, selected from the group consisting of xanthan gum, guar gum, pectin, methyl cellulose, hydroxypropyl methylcellulose, and combinations thereof; and other ingredients.

European Patent Application No. EP 1 561 380 discloses a dough composition comprising gluten-free cereal flour, a water-soluble cellulose ether, and a low substituted cellulose ether having a molar substitution of 0.05-1.0. Examples of suitable water-soluble cellulose ethers include alkyl celluloses such as methyl cellulose, and hydroxyalkyl alkyl celluloses such as hydroxypropyl methyl cellulose or hydroxyethyl methyl cellulose. Preferred examples of low substituted cellulose ethers include a low substituted hydroxypropyl cellulose having a molar substitution of 0.091 to 0.51 and hydroxyethyl ethyl cellulose. The bread made from the dough composition is said to have a good mouth feel and a satisfactory volume, to retain softness over time, and to be eatable by those patients of food allergy to wheat or the like. However, the produced bread according to the examples only has a specific volume of about 2.5 - 3 cm³/g.

European Patent Application No. EP 2 153 724 discloses a dough composition which comprises at least a water-soluble hydroxypropyl methylcellulose having a hydroxypropoxyl molar substitution of from 0.05 to 0.3 and a degree of methoxyl substitution of from 1.4 to 1.9, wherein hydroxypropoxyl groups are classified into substituted hydroxypropoxyl groups having hydroxyl groups of the hydroxypropoxyl groups substituted further with methoxyl groups and unsubstituted hydroxypropoxyl groups having hydroxyl groups of the hydroxypropoxyl groups unsubstituted, and a ratio (A/B) of a molar fraction (A) of the substituted hydroxypropoxyl groups to a molar fraction (B) of the unsubstituted hydroxypropoxyl groups is 0.4 or greater; a gluten-free cereal flour; and water. A soft texture and good swallow feeling is reported.

US patent application publication No. 2008/0038434 discloses a composition for making a gluten-free product, which comprises a gluten-free gas retaining polymer, such as a chewing gum base, a gluten-free setting polymer, such as corn zein, and optionally a hydrocolloid, such as methylcellulose or hydroxypropyl methylcellulose. However, the suggested compositions for making a gluten-free product are complex and include a large number of ingredients.

In view of the above-mentioned deficiencies of the prior art compositions, one object of the present invention is to provide new compositions which are useful for the production of gluten-free food products. A preferred object of the present invention is to produce new compositions which are useful for the production of gluten-free food products, such as bakery products, of a high specific volume. A high specific volume of bakery products like bread is a main aspect of good mouth feel properties of the product and meets the consumers' visual expectations.

### Summary

One aspect of the present invention is a composition which comprises a) a gluten-free cereal flour, and b) a hydroxypropyl methylcellulose or methyl cellulose having particle sizes such that more than 50 weight percent of the hydroxypropyl methylcellulose or methyl cellulose particles are retained on a sieve of 150 micrometers mesh size and pass through a sieve of 420 micrometers mesh size.

Another aspect of the present invention is the use of the above-mentioned composition for making a dough or batter additionally comprising water and one ore more optional ingredients.

Yet another aspect of the present invention is the use of the above-mentioned composition or above-mentioned dough or batter in a food product.

### Detailed Description

One aspect of the present invention is a composition which comprises a gluten-free cereal flour. This means that the composition itself and dough, batter or food products made from the composition typically are also gluten-free. A typical method of making gluten-free food products consists of using only ingredients derived from gluten-free starting materials, rather than using a flour derived from a gluten-containing grain, such as wheat. Accordingly, the composition of the present invention comprises a) a gluten-free cereal flour, such as: amaranth flour, arrowroot flour, rice flour, buckwheat flour, corn flour, garbanzo bean flour, garfava flour (a flour produced by Authentic Foods which is made from a combination of garbanzo beans and fava beans), millet flour, oat flour, potato flour, quinoa flour, Romano bean flour, sorghum flour, soy flour, sweet rice flour, tapioca flour, or teff flour or a combination of two or more such flours. Preferred is rice flour, buckwheat flour, corn flour, millet flour, tapioca flour, or potato flour, or a combination of two or more such flours. The flour is preferably used in an amount of from 50 to 98 percent, more preferably from 70 to 95 percent, based on the total dry weight of the composition. Furthermore, the composition of the present invention comprises b) a hydroxypropyl methylcellulose or methyl cellulose. Hydroxypropyl methylcellulose is preferred over methyl cellulose. Component b) is preferably used in an amount of at least 0.1 parts, more preferably at least 0.5 parts, and most preferably at least 1.0 parts by weight, based on 100 parts by weight of the gluten-free cereal flour(s). Component b) is preferably used in an amount of up to 15 parts, more preferably up to 10 parts and most preferably up to 5 parts by weight, based on 100 parts by weight of the gluten-free cereal flour(s).

Preferred methyl celluloses contain from 10 to 40 percent, more preferably from 20 to 35 percent, most preferably from 27 to 32 percent by weight of methyl groups, as determined according to United States Pharmacopeia (USP 32). Preferred hydroxypropyl methylcelluloses contain from 10 to 40 percent, more preferably from 15 to 30 percent, and most preferably from 19 to 24 percent by weight of methoxyl groups and from 3 to 35 percent, more preferably from 4 to 32, and most preferably from 4 to 12 percent by weight of hydroxypropoxyl groups, as determined according to United States Pharmacopeia (USP 32).

It is an essential feature of the present invention that the composition, which comprises a) a gluten-free cereal flour, also comprises b) a hydroxypropyl methylcellulose or methyl cellulose which has particle sizes that more than 50, preferably at least 60, more preferably at least 70, most preferably at least 80 and particularly at least 90 weight percent of the hydroxypropyl methylcellulose or methyl cellulose particles are retained on a sieve of 150 micrometers mesh size and pass through a sieve of 420 micrometers mesh size. In one embodiment of the invention at least 95 weight percent or even at least 99 weight percent of the hydroxypropyl methylcellulose or methyl cellulose particles are retained on a sieve of 150 micrometers mesh size and pass through a sieve of 420 micrometers mesh size.

It has surprisingly been found that the composition of the present invention which comprises a hydroxypropyl methylcellulose or methyl cellulose of the above-mentioned particle size distribution is useful for producing food products, such as bakery products, and in particular bread, which have a substantially higher specific volume than comparable gluten-free food products comprising a comparable hydroxypropyl methylcellulose or methyl cellulose having particle sizes such that more than 50, typically at least 60, 70, 80, 90, 95 or even at least 99 weight percent of the hydroxypropyl methylcellulose or methyl cellulose pass through a sieve of 150 micrometers mesh size or are retained on a sieve of 420 micrometers mesh size. A high specific volume of bakery products like bread is a main aspect of good mouth feel properties of the product and is therefore highly desired by the consumers. It has also been found that the composition of the present invention is useful for producing food products, such as bakery products, and in particular bread, which have an excellent and balanced combination of specific volume, firmness, springiness, and moisture content.

The viscosity of the methylhydroxypropyl cellulose or methyl cellulose generally is from 300 to 200,000 mPa·s, preferably from 400 to 100,000 mPa·s, more preferably from 1000 to 20,000 mPa·s, and most preferably from 2000 to 20,000 mPa·s, determined in a 2% by weight aqueous solution at 20°C in a Haake VT550 Viscotester at 20°C and at a shear rate of 2.55 s⁻¹.

The composition of the present invention may comprise one or more optional additional ingredients, in addition to components a) and b). Generally not more than 50 parts, preferably not more than 25 parts by weight of optional ingredients other than water are incorporated in the composition of the present invention, based on 100 parts by weight of the gluten-free cereal flour. Water can be added to the composition at a higher amount, as described further below.

The composition of the present invention may comprise a carboxymethyl cellulose as an optional additional ingredient. If a carboxymethyl cellulose is used, it is generally used in an amount of from 0.01 to 1.0 parts, preferably from 0.05 to 0.50 parts, more preferably from 0.10 to 0.30 parts by weight based on 100 parts by weight of the gluten-free cereal flour(s). The term "carboxymethyl cellulose" or "CMC" as used herein encompasses cellulose substituted with groups of the formula -CH₂CO₂A, wherein A is hydrogen or a monovalent cation, such as K⁺ or preferably Na⁺. Preferably the carboxymethyl cellulose is in the form of its sodium salt, i.e., A is Na⁺. Typically, the carboxymethyl cellulose has a degree of substitution of from 0.20 to 0.95, preferably from 0.40 to 0.95, and more preferably from 0.65 to 0.95. The degree of substitution is the average number of OH groups that have been substituted in one anhydroglucose unit. It is determined according to ASTM D 1439-03 "Standard Test Methods for Sodium Carboxymethylcellulose; Degree of Etherification, Test Method B: Nonaqueous Titration". The treatment of a solid sample of the CMC with glacial acetic acid at boiling temperature releases an acetate ion quantity equivalent to the sodium carboxymethyl groups. These acetate ions can be titrated as a strong base in anhydrous acetic acid using a perchloric acid standard solution. The titration end point is determined potentiometrically. Other alkaline salts of carboxylic acids (e. g. sodium glycolate and di-sodium diglycolate) behave similarly and are co-titrated.

The viscosity of the carboxymethyl cellulose generally is from 20 to 20,000 mPa·s, preferably from 25 to 12,000 mPa·s, more preferably from 100 to 5,000 mPa·s, and most preferably from 500 to 2,500 mPa·s, determined in a 1% by weight aqueous solution at 20°C, using a Brookfield LVT viscosimeter, spindle No. 3, at 30 rpm.

Examples of other optional additional ingredients in gluten-free compositions, dough, batter and food products are as follows: starches, including potato starch and cornstarch; gums, including xanthan gum and guar gum; gelatin; eggs; egg replacers; sweeteners, including sugars, molasses, and honey; salt; yeast; chemical leavening agents, including baking powder and baking soda; fats, including margarine and butter; oils, including vegetable oil; vinegar; dough enhancer; dairy products, including milk, powdered milk, and yogurt; soy milk; nut ingredients, including almond meal, nut milk, and nut meats; seeds, including flaxseed, poppy seeds, and sesame seeds; fruit and vegetable ingredients, including fruit puree and fruit juice; and flavorings, including rye flavor powder, vanilla, cocoa powder, and cinnamon. However, this is not a comprehensive list of all ingredients that can be used to make gluten-free food products, such as gluten-free bakery products.

In one aspect of the invention the composition of the present invention is in essentially dry form. When the composition of the present invention is in essentially dry form, the hydroxypropyl methylcellulose or methyl cellulose essentially maintains its particle size distribution in the composition.

Water may be added to the composition of the invention for preparing dough or batter, for example a bread dough. It is generally added in an amount of from 50 to 150 parts by weight, preferably from 60 to 100 parts by weight, more preferably from 79 to 90 parts by weight, based on 100 parts by weight of the gluten-free cereal flour. Depending on the amount of added water, the hydroxypropyl methylcellulose or methyl cellulose may be partially or fully dissolved in the water and partially or fully lose its particulate structure. However, the original particle size distribution of hydroxypropyl methylcellulose or methyl cellulose surprisingly still has a significant influence on the properties of food products produced from dough or batter comprising water, as illustrated by the examples below.

The composition of the present invention is useful for preparing gluten-free food products, such as gluten-free bakery products, like breads, muffins, cakes, cookies or pizza crusts; gluten-free pasta, cereal products, crackers, and bar products. The composition of the present invention can be processed to the gluten-free food product in a conventional manner, for example by starting from the composition of the present invention in the form of a dough or a batter, subjecting it to molding or casting, optionally leavening the composition, and optionally baking it, depending on the kind of food product to be produced.

The gluten-free food products are an excellent replacement of traditional gluten-containing food products, such as food products containing wheat flour. Accordingly, providing the food product of the present invention to an individual suffering from a gluten-related disorder is an effective method of managing a gluten-related disorder in the individual.

The following examples are for illustrative purposes only and are not intended to limit the scope of the present invention. Unless otherwise mentioned, all parts and percentages are by weight.

### Example 1 and Comparative Examples A - D

A dough composition is prepared from 30 parts of rice flour, 10 parts of tapioca flour, 10 parts of potato flour, 40 parts of water, 1 part of salt, 4 parts of sucrose, 3 parts of vegetable oil, 1 part of active yeast, and 1.5 parts of hydroxypropyl methylcellulose (HPMC) described further below. All the dry ingredients are weighted into a container and mixed well. The liquid ingredients are added into the dry ingredients under high shear. The dough is kneaded for 3 min and then transferred to a greased loaf pan for proofing at 100F (38°C) for one hour and 15 min. After that, it is baked at 392F (200°C) for 37 min. The bread physical properties are analyzed after the bread cooling for 2 hours.

HPMC: The HPMC is commercially available and has 22.8 percent methoxyl groups by weight and 8 percent hydroxypropoxyl groups by weight, and a viscosity of about 4000 mPa·s, determined in a 2% by weight aqueous solution at 20°C using a Brookfield viscometer, spindle No. 4, 20 rpm.

The commercially available HPMC is sieved through screens having mesh sizes of 44 micrometers (325 U.S. Standard mesh sieve), 74 micrometers (200 U.S. Standard mesh sieve), 150 micrometers (100 U.S. Standard mesh sieve) and 420 micrometers (40 U.S. Standard mesh sieve).

The HPMC used in the (comparative) examples has the following particle sizes:
Comparative Example A: HPMC particles that pass through a sieve of 44 micrometers mesh size.
Comparative Example B: HPMC particles that pass through a sieve of 74 micrometers mesh size but are retained on a sieve of 44 micrometers mesh size.
Comparative Example C: HPMC particles that pass through a sieve of 150 micrometers mesh size but are retained on a sieve of 74 micrometers mesh size.
Example 1: HPMC particles that pass through a sieve of 420 micrometers mesh size but are retained on a sieve of 150 micrometers mesh size.
Comparative Example D: HPMC particles that are retained on a sieve of 420 micrometers mesh size.

The HPMC particles of Comparative Examples A - C are obtained by sieving commercially available HPMC.

The HPMC particles of Example 1 and of Comparative Example C are obtained by granulating the commercially available HPMC to increase its particle size and by subsequent sieving through screens of 150 micrometers and 420 micrometers mesh size. Granulation is conducted by a known wet granulation process using water for granulation.

The firmness and springiness and the moisture content of the bread listed in Table 1 below are measured as follows:
The moisture content is measured by loss on drying (LOD) using a Mettler LP 16 IR heater in conjunction with a Mettler PM100 scale. 0.5-1 g of bread is distributed evenly on an aluminum pan. The pan is then placed on the LOD balance and the cover closed. The heater is programmed to dry the bread at 120C. The instrument will continue to heat the sample until its stops losing weight. The moisture content is calculated by the weight loss of the sample. Moisture Content = (Initial sample weight - final sample weight)/initial sample weight.

The firmness and springiness are measured using a TA.XT2 Texture Analyzer. A slice of bread taken from the middle of the loaf is placed on the platform of the TA.XT2. A probe which is at known height then drops slowly onto the slice of bread. Once it comes in contact with the bread it drops a further 25% of the thickness of the bread slice, continually measuring the force the bread applies to it. Once at 25%, the probe stops dropping. The force the bread applies on the probe at this time is the firmness. After 60 seconds in this position the probe then lifts away from the slice of bread. The spring is the ratio of the force the bread was applying on the probe after 60 seconds divided by the force applied at 0 seconds.

**Table 1**

| **(Comparative) Example** | **A** | **B** | **C** | **1** | **D** |
|---|---|---|---|---|---|
| Particle sizes of HPMC (µm) | < 44 (325 U.S. Std Mesh) | 44 to < 74 (200 U.S. Std Mesh) | 74 to < 150 (100 U.S. Std Mesh) | 150 to < 420 (40 U.S. Std Mesh) | 420 or more (retained on 40 U.S. Std Mesh) |

| **Properties of Bread** | | | | | |
|---|---|---|---|---|---|
| Specific Volume (cm3/g) | 3.9 | 3.8 | 3.8 | 6.1 | 1.6 |
| Firmness (g) | 100 | 114 | 83 | 58 | 3388 |
| Springiness (%) | 53 | 52 | 56 | 54 | 32 |
| Moisture (%) | 45 | 46 | 46 | 46 | 45 |

The results in Table 1 illustrate that food products, such as bakery products, and in particular bread, can be produced from the composition of the present invention which a high specific volume and a soft texture. The produced bakery products, and in particular bread, have an excellent and surprisingly balanced combination of specific volume, firmness, springiness, and moisture content.

## Claims

1. A composition comprising a) a gluten-free cereal flour, and b) a hydroxypropyl methylcellulose or methyl cellulose having particle sizes such that more than 50 weight percent of the hydroxypropyl methylcellulose or methyl cellulose particles are retained on a sieve of 150 micrometers mesh size and pass through a sieve of 420 micrometers mesh size.

2. The composition of claim 1 wherein the hydroxypropyl methylcellulose or methyl cellulose has particle sizes such that at least 70 weight percent of the particles are retained on a sieve of 150 micrometers mesh size and pass through a sieve of 420 micrometers mesh size.

3. The composition of claim 1 wherein the hydroxypropyl methylcellulose or methyl cellulose has particle sizes such that at least 90 weight percent of the particles are retained on a sieve of 150 micrometers mesh size and pass through a sieve of 420 micrometers mesh size.

4. The composition of any one of claims 1 to 3 wherein component b) is hydroxypropyl methylcellulose.

5. The composition of claim 4 wherein the hydroxypropyl methylcellulose has a viscosity of 1000 to 20,000 mPa·s, determined in a 2% by weight aqueous solution at 20°C.

6. The composition of claim 4 or 5 wherein the hydroxypropyl methylcellulose has from 15 to 30 percent by weight of methoxyl groups and from 4 to 32 percent by weight of hydroxypropoxyl groups.

7. The composition of any one of claims 1 to 6 comprising from 0.1 to 15 parts by weight of component b), based on 100 parts by weight of the gluten-free cereal flour.

8. The composition of any one of claims 1 to 7 comprising rice flour, buckwheat flour, corn flour, millet flour, tapioca flour, potato flour, or a combination of two or more flours.

9. The composition of claim 8 being in essentially dry form.

10. Use of the composition of any one of claims 1 to 9 for making a dough or batter additionally comprising water and one or more optional ingredients.

11. Use of claim 10 wherein the dough or batter comprises from 50 to 150 parts by weight of water, based on 100 parts by weight of the gluten-free cereal flour.

12. Use of the composition of any one of claims 1 to 8 or the dough or batter according to claims 10 or 11 in a food product.

13. Use of claim 12 wherein the food product is selected from the group consisting of gluten-free bakery products, gluten-free pasta, gluten-free cereal products, gluten-free crackers, and gluten-free bar products.

## Patentansprüche

1. Zusammensetzung enthaltend a) ein glutenfreies Getreidemehl und b) eine Hydroxypropylmethylcellulose oder Methylcellulose mit Teilchengrößen, so dass mehr als 50 Gew.-% der Hydroxypropylmethylcellulose- oder Methylcelluloseteilchen auf einem Sieb mit einer Maschenweite von 150 µm zurückgehalten werden und durch ein Sieb mit einer Maschenweite von 420 µm hindurchgehen.

2. Zusammensetzung nach Anspruch 1, wobei die Hydroxypropylmethylcellulose oder Methylcellulose Teilchengrößen aufweist, so dass wenigstens 70 Gew.-% der Teilchen auf einem Sieb mit einer Maschenweite von 150 µm zurückgehalten werden und durch ein Sieb mit einer Maschenweite von 420 µm hindurchgehen.

3. Zusammensetzung nach Anspruch 1, wobei die Hydroxypropylmethylcellulose oder Methylcellulose Teilchengrößen aufweist, so dass wenigstens 90 Gew.-% der Teilchen auf einem Sieb mit einer Maschenweite von 150 µm zurückgehalten werden und durch ein Sieb mit einer Maschenweite von 420 µm hindurchgehen.

4. Zusammensetzung nach einem der Ansprüche 1 bis 3, wobei Komponente b) Hydroxypropylmethylcellulose ist.

5. Zusammensetzung nach Anspruch 4, wobei die Hydroxypropylmethylcellulose eine Viskosität von 1.000 bis 20.000 mPa·s, bestimmt in einer 2-gew.-%igen wässrigen Lösung bei 20°C, aufweist.

6. Zusammensetzung nach Anspruch 4 oder 5, wobei die Hydroxypropylmethylcellulose 15 bis 30 Gew.-% Methoxylgruppen und 4 bis 32 Gew.-% Hydroxypropoxygruppen aufweist.

7. Zusammensetzung nach einem der Ansprüche 1 bis 6, die von 0,1 bis 15 Gewichtsteile Komponente b), bezogen auf 100 Gewichtsteile des glutenfreien Getreidemehls, enthält.

8. Zusammensetzung nach einem der Ansprüche 1 bis 7, die Reismehl, Buchweizenmehl, Maismehl, Hirsemehl, Tapiokamehl, Kartoffelmehl oder eine Kombination von zwei oder mehr Mehlen enthält.

9. Zusammensetzung nach Anspruch 8, die im Wesentlichen in trockener Form vorliegt.

10. Verwendung der Zusammensetzung nach einem der Ansprüche 1 bis 9 zur Herstellung eines Teigs oder eines Frittierteigs, der zusätzlich Wasser und einen oder mehrere optionale Bestandteile enthält.

11. Verwendung nach Anspruch 10, wobei der Teig oder Frittierteig 50 bis 150 Gewichtsteile Wasser, bezogen auf 100 Gewichtsteile des glutenfreien Getreidemehls, enthält.

12. Verwendung der Zusammensetzung nach einem der Ansprüche 1 bis 8 oder des Teigs oder des Frittierteigs gemäß der Ansprüche 10 oder 11 in einem Lebensmittelprodukt.

13. Verwendung nach Anspruch 12, wobei das Lebensmittelprodukt ausgewählt ist aus der Gruppe bestehend aus glutenfreien Backwaren, glutenfreier Pasta, glutenfreien Getreideprodukten, glutenfreien Kräckern und glutenfreien Riegelprodukten.

## Revendications

1. Une composition comprenant a) une farine de céréale sans gluten, et b) une hydroxypropyl méthylcellulose ou méthyl cellulose ayant des tailles de particule telles que plus de 50 pour cent en poids des particules d'hydroxypropyl méthylcellulose ou de méthyl cellulose sont retenues sur un tamis de taille de maille de 150 micromètres et passent à travers un tamis de taille de maille de 420 micromètres.

2. La composition de la revendication 1 dans laquelle l'hydroxypropyl méthylcellulose ou la méthyl cellulose a des tailles de particule telles qu'au moins 70 pour cent en poids des particules sont retenus sur un tamis de taille de maille de 150 micromètres et passent à travers un tamis de taille de maille de 420 micromètres.

3. La composition de la revendication 1 dans laquelle l'hydroxypropyl méthylcellulose ou la méthyl cellulose a des tailles de particule telles qu'au moins 90 pour cent en poids des particules sont retenus sur un tamis de taille de maille de 150 micromètres et passent à travers un tamis de taille de maille de 420 micromètres.

4. La composition de n'importe laquelle des revendications 1 à 3 dans laquelle le constituant b) est l'hydroxypropyl méthylcellulose.

5. La composition de la revendication 4 dans laquelle l'hydroxypropyl méthylcellulose a une viscosité de 1 000 à 20 000 mPa·s, déterminée dans une solution aqueuse à 2 % en poids à 20 °C.

6. La composition de la revendication 4 ou de la revendication 5 dans laquelle l'hydroxypropyl méthylcellulose a de 15 à 30 pour cent en poids de groupes méthoxyl et de 4 à 32 pour cent en poids de groupes hydroxypropoxyl.

7. La composition de n'importe laquelle des revendications 1 à 6 comprenant de 0,1 à 15 parties en poids de constituant b), rapporté à 100 parties en poids de la farine de céréale sans gluten.

8. La composition de n'importe laquelle des revendications 1 à 7 comprenant de la farine de riz, de la farine de sarrasin, de la farine de maïs, de la farine de millet, de la farine de tapioca, de la fécule de pomme de terre, ou une combinaison de deux farines ou plus.

9. La composition de la revendication 8 étant sous forme essentiellement sèche.

10. Utilisation de la composition de n'importe laquelle des revendications 1 à 9 pour fabriquer une pâte ou pâte à frire comprenant de plus de l'eau et un ou plusieurs ingrédients facultatifs.

11. Utilisation de la revendication 10 dans laquelle la pâte ou pâte à frire comprend de 50 à 150 parties en poids d'eau, rapporté à 100 parties en poids de la farine de céréale sans gluten.

12. Utilisation de la composition de n'importe laquelle des revendications 1 à 8 ou la pâte ou pâte à frire selon les revendications 10 ou 11 dans un produit alimentaire.

13. Utilisation de la revendication 12 dans laquelle le produit alimentaire est sélectionné dans le groupe constitué de produits de boulangerie sans gluten, de pâtes sans gluten, de produits aux céréales sans gluten, de biscuits sans gluten, et de produits en barre sans gluten.
